# FASCICULE DE BREVET EUROPEEN

(11) **EP 0 515 259 B1**
(45) Date de publication et mention de la délivrance du brevet: **07.01.1999**
(21) Numéro de dépôt: 92401351.9
(22) Date de dépôt: 18.05.1992
(51) Int. Cl.: H02K 1/24, H02K 19/22, H02K 5/24

(54) **Alternateur triphasé pour véhicules automobiles**
Drehstromgenerator für Kraftfahrzeuge bzw. Kraftwagen
Three-phase alternator for automobile type vehicles

(30) Priorité: 21.05.1991 FR 9106116
(43) Date de publication de la demande: 25.11.1992
(73) Titulaire: VALEO EQUIPEMENTS ELECTRIQUES MOTEUR, 94000 Créteil (FR)
(72) Inventeur: Lefrançois, Philippe, F-94000 Creteil (FR); Couvert, Pascal, F-94700 Maison Alfort (FR)
(74) Mandataire: Gamonal, Didier

(56) Documents cités:
- WO-A-88/06367
- DE-A- 3 934 411
- FR-A- 2 256 572

## Description

La présente invention concerne, d'une manière générale, un alternateur triphasé pour véhicule automobile, et plus particulièrement un alternateur triphasé dont le rotor est monté de façon tournante dans un stator et comporte deux roues polaires sensiblement identiques se faisant vis-à-vis, tel que décrit dans les documents DE-A-3 934 411, WO-A-88/06367 et FR-A-2 256 572.

Ces deux roues polaires se présentent sous forme de flasques circulaires, comportant chacune des dents sensiblement parallèles à l'axe du rotor en forme de griffes. Les dents de l'une des roues polaires sont angulairement décalées par rapport aux dents de l'autre roue de manière à ce que les dents des deux roues polaires s'entre-pénètrent alternativement. Le bobinage du rotor étant alimenté en courant continu, les dents de l'une des roues constituent les pôles sud alors que les dents de l'autre roue constituent les pôles nord. Le défilement des dents devant les pôles du stator, par la rotation du rotor, crée dans le bobinage du stator un courant alternatif induit.

Lorsqu'un alternateur de ce type est en fonctionnement, il est nécessaire de le refroidir de manière à ce que l'ensemble de la machine reste à une température limitée lui permettant d'assurer un rendement optimal.

De manière connue, le refroidissement de tels alternateurs s'effectue à l'aide d'au moins un ventilateur solidaire en rotation de l'axe du rotor et situé à une extrémité de celui-ci, en général à l'extérieur du carter renfermant l'ensemble stator-rotor, comme visible à la figure 1 des documents WO-A-88/06367 et DE-A-39 34 411.

Pour améliorer le refroidissement et donc augmenter le rendement des alternateurs, comme décrit par exemple dans le document EP-B-0300 063, le ou les ventilateurs sont de plus en plus souvent implantés à l'intérieur même du carter et fixés sur les flasques des roues polaires de manière à ce que leurs pales de ventilation soient en regard des bobinages du stator qui sont l'objet d'un dégagement de chaleur important.

Si cette conception permet un meilleur refroidissement et donc un plus grand rendement de l'alternateur, elle présente l'inconvénient de générer des bruits dus au brassage de l'air à l'intérieur du carter.

Une analyse acoustique poussée a montré que les bruits résultaient, en particulier, du mouvement de l'air brassé à proximité immédiate du flasque du ventilateur, c'est-à-dire à proximité de la périphérie externe des roues polaires se trouvant en vis-à-vis des bobinages du stator.

Ces bruits sont encore accentués par les vitesses de plus en plus élevées, de 18 à 20000 tours/minute, auxquelles doivent fonctionner de tels alternateurs.

Pour diminuer les phénomènes de bruit, on a pensé à agir sur la conception même des ventilateurs en les réalisant avec, par exemple, des pales asymétriques angulairement. Si un tel aménagement permet d'atténuer globalement le niveau de bruit, cette atténuation n'est pas suffisante pour que l'ensemble de l'alternateur soit considéré comme silencieux.

La présente invention résout ces problèmes et propose à cet effet un alternateur triphasé pour véhicule automobile comportant, d'une part, un ensemble statorique constitué d'un paquet de tôles et des enroulements statoriques et, d'autre part, un ensemble rotorique constitué en particulier de deux roues polaires à griffes placées en vis-à-vis, chaque roue polaire étant formée d'un flasque sensiblement perpendiculaire à l'axe du rotor et sur lequel est fixé un ventilateur, des dents polaires ménagées à la périphérie dudit flasque et s'étendant sensiblement parallèlement à l'axe dudit rotor, les dents de l'une des roues étant angulairement décalées par rapport aux dents de l'autre roue, dans lequel chaque dent polaire est délimitée au moins par une surface extérieure cylindrique s'étendant parallèlement à l'axe du rotor, par une surface arrière dans le plan de la face arrière du flasque, ladite surface arrière se raccordant à la surface extérieure par une surface inclinée, par une surface avant perpendiculaire à l'axe de symétrie de la dent et formant l'extrémité libre de celle-ci, par deux premières surfaces latérales parallèles à l'axe de symétrie de la dent, au droit du flasque et s'étendant longitudinalement dans le sens de l'épaisseur de ce flasque par des deuxièmes surfaces latérales au-delà du flasque reliées par la surface avant et raccordées à la surface extérieure par des chanfreins périphériques, caractérisé en ce que chaque dent présente au moins un chanfrein dit chanfrein antibruit s'étendant depuis la surface arrière jusqu'au voisinage de l'une des deuxièmes surfaces latérales et étant délimité par la surface extérieure cylindrique, par la surface inclinée, par la surface arrière, par l'une des premières surfaces latérales et par l'un des chanfreins périphériques, ledit chanfrein antibruit présentant une inclinaison différente des inclinaisons desdites surfaces délimitant chaque dent.

De manière préférentielle, chaque dent présente, par rapport à un axe de symétrie, deux chanfreins antibruit identiques.

Selon d'autres caractéristiques de l'invention :
- Chaque chanfrein antibruit se présente sous la forme d'une surface globalement plane ou sphérique.
- Chaque chanfrein antibruit présente, avec la deuxième surface latérale, un point d'intersection situé, par rapport à la face arrière du flasque, à une distance telle que ledit point d'intersection se situe approximativement au droit des extrémités des tôles du stator.
- L'intersection du chanfrein antibruit avec la surface inclinée présente, par rapport à un axe diamétral passant par le centre de deux dents opposées, un angle compris entre 40° et 50°, et de préférence égal à 45°.
- La distance entre le point d'intersection et les extrémités des tôles du stator est au maximum de deux millimètres et de préférence égale à 0,5 millimètre.

La description qui va suivre fera mieux comprendre comment l'invention peut être réalisée en regard des dessins annexés, donnés à titre d'exemple non limitatif, dans lesquels :
- la figure 1 représente une vue générale, en coupe axiale partielle, d'un alternateur selon l'invention ;
- la figure 2 représente une vue en perspective, à plus grande échelle, d'une des roues polaires du rotor de l'alternateur selon l'invention ;
- la figure 3 est une vue en bout de la face arrière d'une roue polaire, conformément à l'invention et selon la flèche F de la figure 1 ;
- la figure 4 est une coupe de la roue polaire suivant la ligne IV-IV de la figure 3 ;
- la figure 5 est, à échelle agrandie, une vue de dessus d'une dent de la roue polaire de la figure 3.

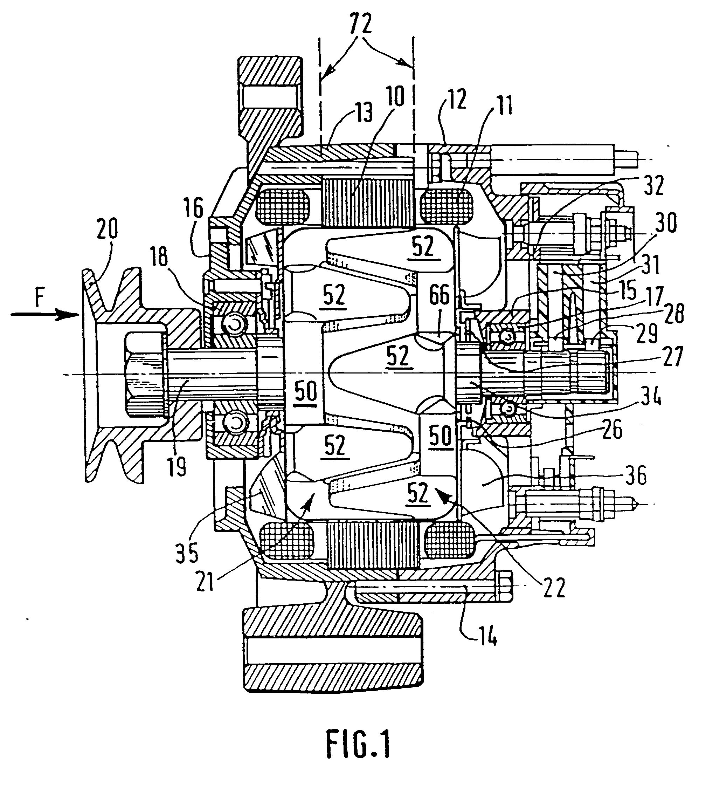

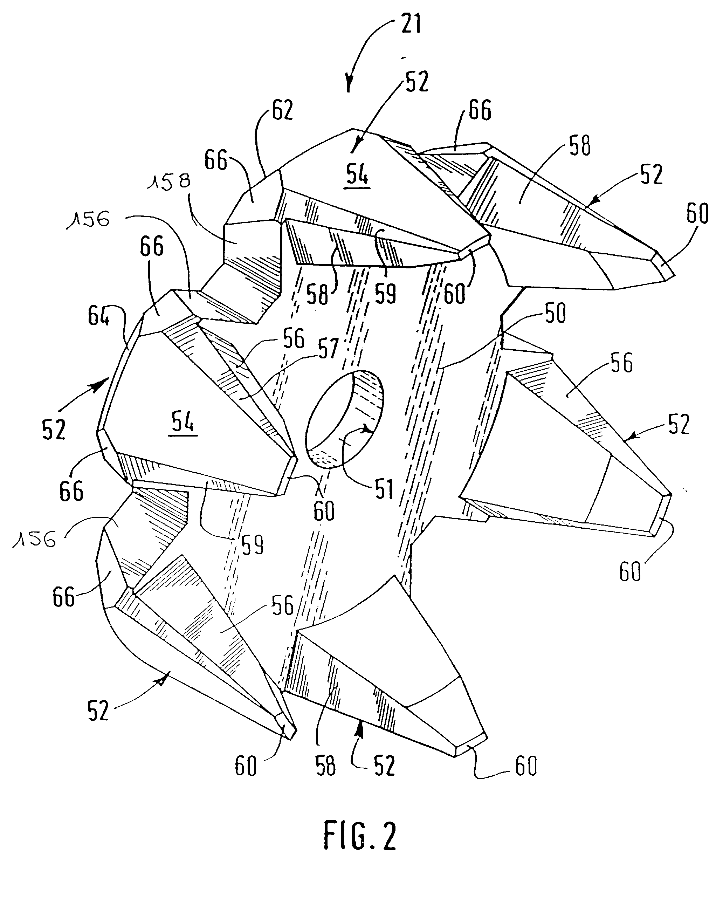

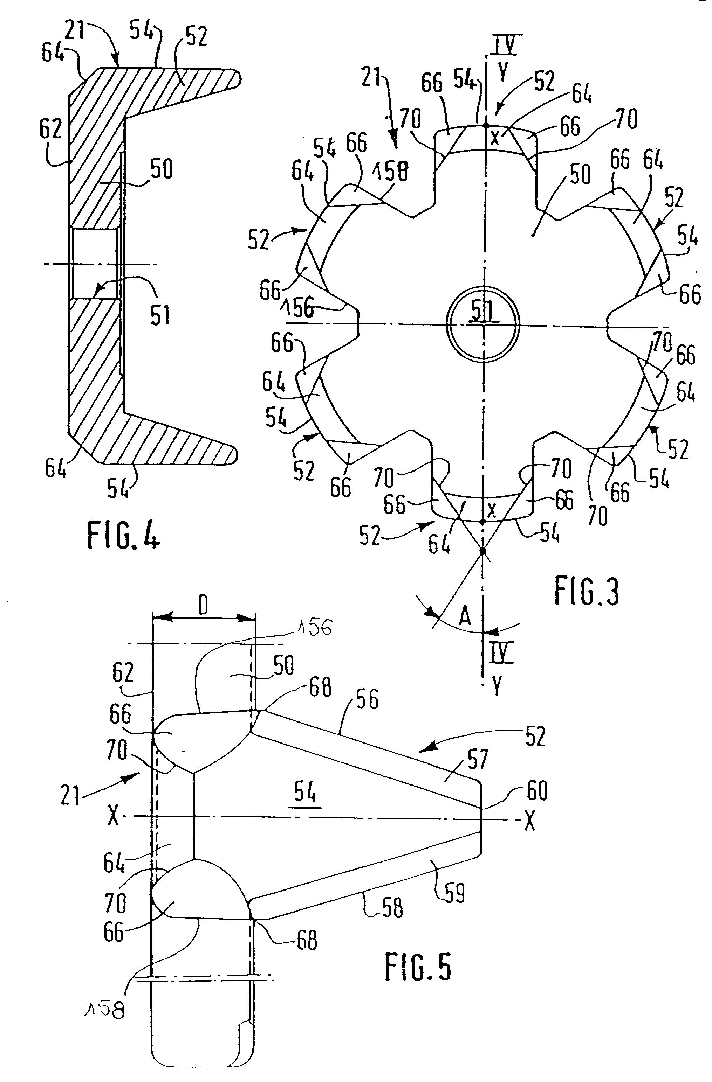

On se réfère tout d'abord à la figure 1 qui illustre l'ensemble d'un alternateur de véhicule automobile équipé en particulier d'un rotor suivant l'invention.

Un alternateur de ce type comprend un ensemble statorique constitué d'un paquet de tôles feuilletées 10 dans lequel sont ménagées une série d'encoches contenant les enroulements statoriques 11. L'ensemble statorique est maintenu en position entre deux flasques d'extrémité 12,13 rendus solidaires par des vis 14.

Chacun des flasques d'extrémité 12,13 comprend un palier 15,16 constitué d'un roulement à billes respectivement 17,18 dans lesquels tourillonne un arbre 19 entraîné par le moteur à combustion interne par l'intermédiaire d'une poulie 20.

L'arbre 19 porte l'ensemble rotorique constitué de deux roues polaires à griffes 21,22 emprisonnant un noyau central (non représenté) sur lequel est placée une bobine inductrice.

L'ensemble rotorique est emmanché à force sur l'arbre 19 et en est rendu solidaire en rotation, par exemple par des cannelures (non représentées) ménagées sur ledit arbre 19.

Les extrémités de la bobine inductrice sont reliées à des cosses respectivement 26,27 solidaires d'un épaulement 34 ménagé sur l'arbre 19. Les cosses 26,27 sont reliées, à travers l'arbre 19, à deux bagues collectrices 28,29 sur lesquelles viennent frotter deux balais 30,31 situés dans un ensemble porte-balais 32.

Sur chaque roue polaire 21,22 sont fixés, côtés paliers 15 et 16, des ventilateurs respectivement 35,36.

Chacune des roues polaires 21,22 étant identique, les mêmes repères seront utilisés pour décrire les éléments les constituant en se référant en particulier aux figures 2 à 5 sur lesquelles seule la roue polaire 21 a été représentée.

Chaque roue polaire 21,22 comprend un flasque 50 perpendiculaire à l'axe de l'arbre du rotor 19, chaque flasque 50 ayant sa zone centrale transpercée selon son axe par un alésage 51 qui reçoit ledit arbre 19.

A la périphérie externe du flasque 50 sont ménagées de matière six dents polaires 52 uniformément réparties s'étendant vers l'intérieur et sensiblement parallèles à l'axe du rotor.

Les dents 52 de la roue polaire 21 sont décalées de 30° par rapport aux dents 52 de la roue polaire 22, de sorte que ces dents polaires s'entre-pénètrent les unes entre les autres et forment, comme le montre la figure 1, une couronne annulaire d'épanouissement polaire. Les polarités respectives des deux séries de dents polaires 52 sont opposées de sorte que les épanouissements polaires consécutifs présentent aux encoches du stator 10 de l'alternateur des polarités opposées.

En se référant aux figures 2 à 5, chaque dent polaire présente, vue en plan à partir du stator, une forme globalement trapézoïdale et est raccordée par sa grande base au flasque 50 de la roue polaire.

Chaque dent 52 est notamment délimitée par une surface extérieure 54 cylindrique et deux types de surfaces latérales 56,58,156,158.

Au droit du flasque 50, chaque dent 52 présente deux premières surfaces latérales 156,158 parallèles à un axe de symétrie longitudinal X-X de la dent 52 et s'étendant longitudinalement dans le sens de l'épaisseur de ce flasque 50. Au-delà du flasque 50, chaque dent présente deux deuxièmes surfaces latérales 56,58 présentant une obliquité convergente et symétrique par rapport à l'axe X-X. Ces deuxièmes surfaces latérales 56,58 sont reliées par une surface 60, dite surface avant, perpendiculaire à l'axe X-X, qui forme l'extrémité libre de la dent 52 et raccordées à la surface extérieure 54, de manière connue en soi, par des chanfreins périphériques, respectivement 57,59.

La surface extérieure 54 se raccorde à la surface arrière 62 de la dent 52 dans le plan de la surface arrière du flasque 50 par une surface inclinée 64.

Suivant la caractéristique essentielle de l'invention, chaque dent 52 présente au moins un chanfrein 66 dit chanfrein antibruit adjacent simultanément à la surface extérieure 54, à l'une des surfaces latérales 56,156 ou 58,158 et aux surfaces 64 et 62 d'une part, d'autre part, ledit chanfrein antibruit 66 présentant une inclinaison différente des inclinaisons des surfaces auxquelles il est adjacent.

Ainsi suivant l'invention, chaque dent 52 présente au moins un chanfrein 66 dit chanfrein antibruit s'étendant depuis la surface avant 60 jusqu'au voisinage de l'une des deuxièmes surfaces latérales 56,58 et étant délimité par la surface extérieure cylindrique 54 s'étendant parallèlement à l'axe du rotor, par la surface inclinée 64, par la surface arrière 62 par l'une des premières surfaces latérales 156,158 et par l'un des chanfreins périphériques 57,59, ledit chanfrein antibruit présentant une inclinaison différente des inclinaisons desdites surfaces 54, 56, 58, 60, 62, 64, 156, 158 délimitant chaque dent 52.

De manière préférentielle, chaque dent 52 présente deux chanfreins antibruit identiques 66 symétriques par rapport à l'axe X-X.

Suivant le mode d'obtention des roues polaires 21,22, les chanfreins 66 peuvent être des surfaces globalement planes ou globalement sphériques.

De manière préférentielle, figures 3 à 5, le chanfrein antibruit 66 s'étend à partir de la surface arrière 62 du flasque 50 sur une profondeur D telle qu'il présente un point d'intersection 68 (figure 5) avec la deuxième surface latérale 56 concernée (ou 58). Ce point 68 se situe approximativement au droit (figure 1) des extrémités 72 des tôles 10 du stator.

Si l'on appelle d la distance entre le point d'intersection 68 et les extrémités 72 des tôles du stator 10, la distance d est au maximum de deux millimètres ; de manière préférentielle, la distance d est égale à 0,5 millimètre.

Selon une autre caractéristique de l'invention, le chanfrein antibruit 66 présente avec la surface inclinée 64, une intersection 70 faisant avec un axe diamétral YY (figure 3) passant par le centre de deux dents opposées, un angle A dont la valeur est comprise entre 40° et 50° ; de préférence la valeur de l'angle A est choisie à 45°.

On constate que le fonctionnement de l'alternateur qui vient d'être décrit ne donne lieu, quels que soient les régimes de vitesse et de débit de l'alternateur, qu'à des bruits beaucoup plus réduits que ceux que l'on obtient avec des alternateurs analogues de type connu et de dimensionnement similaire.

Grâce à la position géographique des chanfreins antibruit 66 sur chaque dent 52, et leurs caractéristiques dimensionnelles, les roues polaires 21,22 gardent une rigidité mécanique quasi-identique et leur rendement magnétique ne s'en trouve nullement affecté.

Il est bien entendu que les modes de réalisation décrit ci-dessus n'est aucunement limitatif et pourra donner lieu à toutes modifications que l'Homme de l'Art pourra y apporter sans pour cela sortir du cadre de l'invention.

En particulier les roues polaires 21,22 peuvent ne pas être identiques entre elles et comporter un nombre de dents 52 différent de celui représenté dans les dessins.

Par ailleurs, lorsqu'une dent 52 comporte deux chanfreins antibruit 66, ceux-ci peuvent ne pas être identiques et donc présenter une dissymétrie par rapport à l'axe X-X.

De manière plus précise les valeurs correspondant à l'angle A peuvent être différentes pour chacun des deux chanfreins antibruit 66.

## Revendications

1. Alternateur triphasé pour véhicule automobile, comportant, d'une part, un ensemble statorique constitué d'un paquet de tôles (10) et des enroulements statoriques (11) et, d'autre part, un ensemble rotorique constitué en particulier de deux roues polaires à griffes (21,22) placées en vis-à-vis, chaque roue polaire (21,22) étant formée d'un flasque (50) sensiblement perpendiculaire à l'axe du rotor et sur lequel est fixé un ventilateur (35,36), de dents polaires (52) ménagées à la périphérie externe dudit flasque (50) et s'étendant sensiblement parallèlement à l'axe dudit rotor, les dents (52) de l'une des roues (21) étant angulairement décalées par rapport aux dents (52) de l'autre roue (22), dans lequel chaque dent polaire (52) est délimitée au moins par une surface extérieure cylindrique (54) s'étendant parallèlement à l'axe du rotor, par une surface arrière (62) dans le plan de la face arrière du flasque (50), ladite surface arrière (62) se raccordant à la surface extérieure (54) par une surface inclinée (64), par une surface avant (60) perpendiculaire à l'axe de symétrie (X-X) de la dent (52) et formant l'extrémité libre de celle-ci, par deux premières surfaces latérales (156,158) parallèles à l'axe de symétrie (X-X) de la dent (52) au droit du flasque (50) et s'étendant longitudinalement dans le sens de l'épaisseur de ce flasque (50), par des deuxièmes surfaces latérales (56,58) au-delà du flasque (50) reliées par la surface avant (60) et raccordées à la surface extérieure (54) par des chanfreins périphériques (57,59), caractérisé en ce que chaque dent (52) présente au moins un chanfrein (66) dit chanfrein antibruit s'étendant depuis la surface arrière (62) jusqu'au voisinage de l'une des deuxièmes surfaces latérales (56,58) et étant délimité par la surface extérieure cylindrique (54), par la surface inclinée (64), par la surface arrière (62) par l'une des premières surfaces latérales (156,158) et par l'un des chanfreins périphériques (57,59), ledit chanfrein (66) antibruit présentant une inclinaison différente des inclinaisons desdites surfaces (54, 56, 58, 60, 62, 64, 156, 158) délimitant chaque dent (52).

2. Alternateur selon la revendication 1, caractérisé en ce que chaque dent (52) présente par rapport à un axe de symétrie (X,X) deux chanfreins antibruit (66) identiques.

3. Alternateur selon l'une des revendications 1 ou 2, caractérisé en ce que le chanfrein antibruit (66) est une surface globalement plane.

4. Alternateur selon l'une des revendications 1 ou 2, caractérisé en ce que le chanfrein antibruit (66) est une surface globalement sphérique.

5. Alternateur selon l'une quelconque des revendications précédentes, caractérisé en ce que le chanfrein antibruit (66) présente un point d'intersection (68) avec la deuxième surface latérale (56,58).

6. Alternateur selon la revendication 5, caractérisé en ce que le point d'intersection (68) se situe approximativement au droit des extrémités (72) que présentent les tôles du stator (10).

7. Alternateur selon la revendication 6, caractérisé en ce que la distance (D) entre le point d'intersection (68) et le droit des extrémités (72) des tôles du stator (10) présente une valeur maximum de deux millimètres.

8. Alternateur selon la revendication 7, caractérisé en ce que la distance (D) est égale à 0,5 millimètre.

9. Alternateur selon l'une quelconque des revendications 1 à 8, caractérisé en ce que le chanfrein antibruit (66) présente une intersection (70) avec la surface inclinée (64), ladite intersection (70) faisant avec un axe diamétral (YY) passant par le centre de deux dents (52) opposées, un angle (A) compris entre 40° et 50°.

10. Alternateur selon la revendication 9, caractérisé en ce que l'angle (A) a une valeur égale à 45°.

## Claims

1. A three-phase alternator for a motor vehicle comprising firstly a stator assembly consisting of a stack of sheet metal laminations (10) and stator windings (11), and secondly a rotor assembly comprising, in particular, two claw-type pole wheels (21, 22) arranged in opposed relationship, each pole wheel (21, 22) comprising a radial plate (50) substantially at right angles to the axis of the rotor, and on which a fan (35, 36) is fixed, polar teeth (52) arranged at the outer periphery of the said radial plate (50) and extending substantially parallel to the axis of the said rotor, the teeth (52) of one of the wheels (21) being offset circumferentially with respect to the teeth (52) of the other wheel (22), wherein each polar tooth (52) is delimited at least by a cylindrical outer surface (54) extending parallel to the axis of the rotor, a rear surface (62) in the plane of the rear face of the radial plate (50), the said rear surface (62) being joined to the outer surface (54) by an inclined surface (64), a front surface (60) at right angles to the axis of symmetry (X-X) of the tooth (52) and constituting the free end of the latter, two first lateral surfaces (156, 158) parallel to the axis of symmetry (X-X) of the tooth (52), in axial alignment with the radial plate (50) and extending longitudinally in the direction of the thickness of the said radial plate (50), second lateral surfaces (56, 58) beyond the radial plate (50), joined together through the front surface (60) and joined to the outer surface (54) by peripheral chamfers (57, 59), characterised in that each tooth (52) has at least one chamfer (66) referred to as an antinoise chamfer, extending from the rear surface (62) to the vicinity of one of the second lateral surfaces (56, 58) and being delimited by the cylindrical outer surface (54), the inclined surface (64), the rear surface (62), one of the first lateral surfaces (156, 158) and one of the peripheral chamfers (57, 59), the said antinoise chamfer (66) having an inclination different from the inclinations of the said surfaces (54, 56, 58, 60, 62, 64, 156, 158) delimiting each tooth (52).

2. An alternator according to Claim 1, characterised in that each said tooth (52) has two antinoise chamfers (66) which are identical with respect to an axis of symmetry (X, X).

3. An alternator according to Claim 1 or Claim 2, characterised in that the antinoise chamfer (66) is a substantially flat surface.

4. An alternator according to Claim 1 or Claim 2, characterised in that the antinoise chamfer (66) is a generally spherical surface.

5. An alternator according to any one of the preceding Claims, characterised in that the antinoise chamfer (66) defines a point of intersection (68) with the second lateral surface (56, 58).

6. An alternator according to Claim 5, characterised in that the point of intersection (68) is situated in approximate axial alignment with the ends (72) of the stator laminations (10).

7. An alternator according to Claim 6, characterised in that the distance (D) between the point of intersection (68) and the radial plane of the ends (72) of the stator laminations (10) has a maximum value of two millimetres.

8. An alternator according to Claim 7, characterised in that the distance (D) is equal to 0.5 millimetre.

9. An alternator according to any one of Claims 1 to 8, characterised in that the antinoise chamfer (66) defines an intersection (70) with the inclined surface (64), the said intersection (70) making an angle (A) in the range between 40° and 50° with a diametral axis (YY) passing through the centre of two opposed teeth (52).

10. An alternator according to Claim 9, characterised in that the value of the angle (A) is equal to 45°.

## Patentansprüche

1. Drehstromgenerator für Kraftfahrzeuge, der einerseits eine Ständereinheit, die aus einem Blechpaket (10) und Ständerwicklungen (11) besteht, und andererseits eine Läufereinheit umfaßt, die insbesondere aus zwei gegenüberliegenden Klauenpolrädern (21, 22) besteht, wobei jedes Polrad (21, 22) durch eine Scheibe (50), die in etwa senkrecht zur Achse des Läufers verläuft und auf der ein Lüfter (35, 36) befestigt ist, und durch Polzähne (52) gebildet wird, die am äußeren Umfang der besagten Scheibe (50) ausgebildet sind und sich in etwa parallel zur Achse des besagten Läufers erstrecken, wobei die Zähne (52) eines der Polräder (21) im Verhältnis zu den Zähnen (52) des anderen Polrads (22) winklig versetzt sind, wobei jeder Polzahn (52) mindestens begrenzt ist durch eine zylindrische Außenfläche (54), die sich parallel zur Achse des Läufers erstreckt, durch eine hintere Fläche (62) in der Ebene der Rückseite der Scheibe (50), wobei sich die besagte hintere Fläche (62) über eine geneigte Fläche (64) an die Außenfläche (54) anschließt, durch eine vordere Fläche (60), die senkrecht zur Symmetrieachse (X-X) des Zahns (52) verläuft und dessen freies Ende bildet, durch zwei erste Seitenflächen (156, 158), die parallel zur Symmetrieachse (X-X) des Zahns (52) in Höhe der Scheibe (50) verlaufen und sich der Länge nach in Richtung der Dicke dieser Scheibe (50) erstrecken, und durch zweite Seitenflächen (56, 58) hinter der Scheibe (50), die durch die vordere Fläche (60) verbunden sind und sich über Umfangsabschrägungen (57, 59) an die Außenfläche (54) anschließen, **dadurch gekennzeichnet,** daß jeder Zahn (52) mindestens eine als Geräuschdämpfungsabschrägung bezeichnete Abschrägung (66) aufweist, die sich von der hinteren Fläche (62) aus bis in die Nähe einer der zweiten Seitenflächen (56, 58) erstreckt und durch die zylindrische Außenfläche (54), durch die geneigte Fläche (64), durch die hintere Fläche (62), durch eine der ersten Seitenflächen (156, 158) und durch eine der Umfangsabschrägungen (57, 59) begrenzt ist, wobei die besagte Geräuschdämpfungsabschrägung (66) eine Neigung aufweist, die von den Neigungen der besagten Flächen (54, 56, 58, 60, 62, 64, 156, 158), die jeden Zahn (52) begrenzen, verschieden ist.

2. Generator nach Anspruch 1 , **dadurch gekennzeichnet,**daß jeder Zahn (52), bezogen auf eine Symmetrieachse (X,X), zwei identische Geräuschdämpfungsabschrägungen (66) aufweist.

3. Generator nach einem der Ansprüche 1 oder 2, **dadurch gekennzeichnet**, daß die Geräuschdämpfungsabschrägung (66) eine insgesamt ebene Fläche ist.

4. Generator nach einem der Ansprüche 1 oder 2, **dadurch gekennzeichnet,**daß die Geräuschdämpfungsabschrägung (66) eine insgesamt kugelförmige Fläche ist.

5. Generator nach einem der vorangehenden Ansprüche, **dadurch gekennzeichnet,** daß die Geräuschdämpfungsabschrägung (66) einen Schnittpunkt (68) mit der zweiten Seitenfläche (56, 58) aufweist.

6. Generator nach Anspruch 5 , **dadurch gekennzeichnet,**daß sich der Schnittpunkt (68) annähernd in Höhe der Enden (72) befindet, die die Bleche des Ständers (10) aufweisen.

7. Generator nach Anspruch 6 , **dadurch gekennzeichnet,** daß der Abstand (D) zwischen dem Schnittpunkt (68) und der Höhe der Enden (72) der Bleche des Ständers (10) einen maximalen Wert von zwei Millimetern aufweist.

8. Generator nach Anspruch 7 , **dadurch gekennzeichnet,** daß der Abstand (D) gleich 0,5 Millimeter ist.

9. Generator nach einem der Ansprüche 1 bis 8 ,**dadurch gekennzeichnet,** daß die Geräuschdämpfungsabschrägung (66) eine Schnittlinie (70) mit der geneigten Fläche (64) aufweist, wobei die besagte Schnittlinie (70) mit einer durch den Mittelpunkt zweier gegenüberliegender Zähne (52) hindurchgehenden diametralen Achse (YY) einen Winkel (A) zwischen 40° und 50° bildet.

10. Generator nach Anspruch 9, **dadurch gekennzeichnet,** daß der Winkel (A) einen Wert gleich 45° hat.
